# EUROPEAN PATENT APPLICATION

(11) **EP 4 592 887 A1**
(43) Date of publication of application: **30.07.2025**
(21) Application number: 25150419.7
(22) Date of filing: 07.01.2025
(51) Int. Cl.: G06F 40/131, G06F 40/143, G06F 40/35

(54) **INFORMATION PROCESSING PROGRAM, INFORMATION PROCESSING METHOD, AND INFORMATION PROCESSING DEVICE**

(30) Priority: 24.01.2024 JP 2024009025
(71) Applicant: Fujitsu Limited, Kawasaki-shi, Kanagawa 211-8588 (JP)
(72) Inventor: Nakagawa, Takao, Kawasaki-shi, Kanagawa, 211-8588 (JP); Tokumoto, Susumu, Kawasaki-shi, Kanagawa, 211-8588 (JP)
(74) Representative: Hoffmann Eitle

(57) **Abstract**

An information processing program causes a computer to execute a process including: dividing document data intended to be converted, into a plurality of document fragments; when requesting a large language model to convert each of the divided document fragments into a document of which a document structure is specified, creating a conversion request sentence that includes the document fragments immediately preceding the document fragments requested to be converted, the document fragments requested to be converted, and the document fragments after conversion obtained by the large language model by converting the document fragments immediately preceding the document fragments requested to be converted; and inputting the created conversion request sentence to the large language model to execute the conversion into the document fragments of which the document structure is specified.

## Description

### FIELD

The embodiments discussed herein are related to an information processing program, an information processing method, and an information processing device.

### BACKGROUND

In many sorts of document data for human to read, such as a design document, an instruction document, and a procedure document, a document structure (chapters, sections, tables, annotations, referencing texts, referenced texts, and the like) is insufficiently or unsoundly structured by tagging or the like and has low machine readability.

There is an existing technique for converting such insufficiently structured document data into structured document data by causing large language models (LLMs) such as ChatGPT (registered trademark) to read the insufficiently structured document data and requesting the LLMs to structure the insufficiently structured document data. In addition, since the document data intended to be converted, such as a design document, an instruction document, and a procedure document, is long with a large number of pages, there is an existing technique for summarizing the document data intended to be converted such that a token length constraint of an LLM is satisfied and then causing the LLM to read the summarized document data. Furthermore, there is an existing technique for converting and dividing document data intended to be converted into document fragments and causing an LLM to read the document fragments.

Japanese Laid-open Patent Publication No. 2023-73095, Japanese Patent No. 7378003, U.S. Patent Application Publication No. 2004/0117734, U.S. Patent Application Publication No. 2022/0036153, U.S. Patent No. 11748577, and International Publication Pamphlet No. WO 2023/145051 are disclosed as related art.

### SUMMARY

### TECHNICAL PROBLEM

However, the above-mentioned existing techniques have a disadvantage that conversion into appropriately structured document data may sometimes be difficult. For example, in a case where the document data intended to be converted is summarized and the LLM is caused to read the summarized document data, lack of information important for structuring or the like occurs due to summarization, and the accuracy of the sentence data after conversion may sometimes be impaired. In addition, when the document data intended to be converted is converted and divided into the document fragments, there is a case where each of the document fragments does not have information involved in structuring, and structuring by the LLM may sometimes become unstable, such as making headline tagging for a portion originally suitable for subhead tagging.

In one aspect, an object is to provide an information processing program, an information processing method, and an information processing device capable of supporting appropriate conversion into structured document data.

According to an aspect of the embodiments, an information processing program causes a computer to execute a process including: dividing document data intended to be converted, into a plurality of document fragments; when requesting a large language model to convert each of the divided document fragments into a document of which a document structure is specified, creating a conversion request sentence that includes the document fragments immediately preceding the document fragments requested to be converted, the document fragments requested to be converted, and the document fragments after conversion obtained by the large language model by converting the document fragments immediately preceding the document fragments requested to be converted; and inputting the created conversion request sentence to the large language model to execute the conversion into the document fragments of which the document structure is specified.

### ADVANTAGEOUS EFFECTS OF INVENTION

According to one form of embodiment, appropriate conversion into structured document data may be supported.

### BRIEF DESCRIPTION OF DRAWINGS

FIG. 1 is a block diagram illustrating an exemplary functional configuration of an information processing device according to an embodiment;
FIG. 2 is a flowchart illustrating an exemplary working of the information processing device according to the embodiment;
FIG. 3 is an explanatory diagram explaining an example of a request sentence;
FIG. 4 is an explanatory diagram explaining an example of the request sentence;
FIG. 5 is an explanatory diagram explaining an example of a level correction process;
FIG. 6 is an explanatory diagram explaining an example of structuring results;
FIG. 7A is an explanatory diagram explaining an example of output results;
FIG. 7B is an explanatory diagram explaining an example of output results;
FIG. 8 is an explanatory diagram explaining a comparative example;
FIG. 9 is an explanatory diagram explaining a comparative example;
FIG. 10 is an explanatory diagram explaining a comparative example;
FIG. 11 is an explanatory diagram explaining a comparative example; and
FIG. 12 is an explanatory diagram explaining an example of a computer configuration.

### DESCRIPTION OF EMBODIMENTS

Hereinafter, an information processing program, an information processing method, and an information processing device according to embodiments will be described with reference to the drawings. Components having the same functions in the embodiments will be denoted by the same reference signs, and redundant description will be omitted. Note that the information processing program, the information processing method, and the information processing device to be described in the following embodiments are to merely indicate examples and do not limit the embodiments. In addition, each of the following embodiments may be combined as appropriate unless otherwise contradicted.

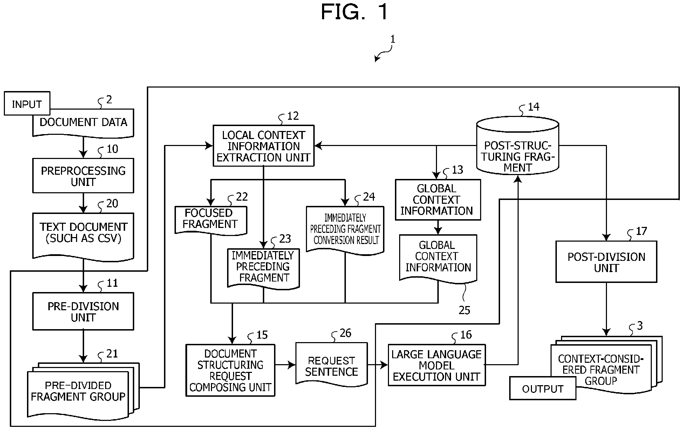

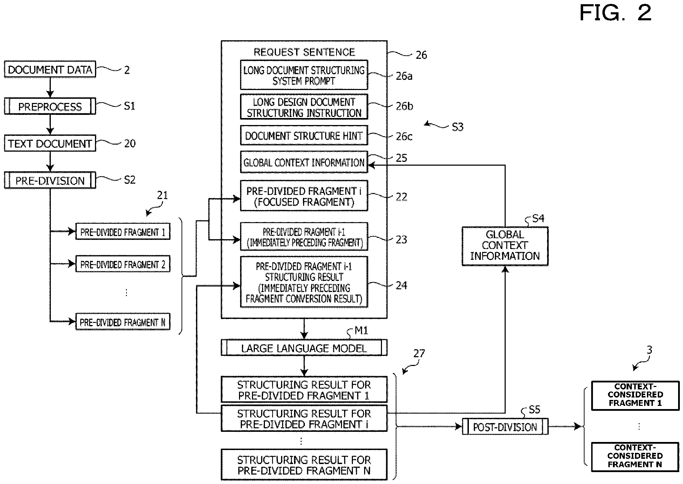

FIG. 1 is a block diagram illustrating an exemplary functional configuration of the information processing device according to an embodiment. FIG. 2 is a flowchart illustrating exemplary working of the information processing device according to the embodiment.

As illustrated in FIGs. 1 and 2, the information processing device 1 receives an input of document data 2 intended to be converted regarding structuring of a document structure and requests a large language model M1 such as ChatGPT to convert the received document data 2, to acquire document data after conversion (after structuring).

The document structure is a context or a hierarchical structure in a document, including chapters, sections, tables, annotations, referencing texts, and referenced texts. The structuring of the document structure means to specify the above document structure in the document by tagging or the like.

For example, in text data in which a chapter and a section are visually expressed using indentation, numbers, comma separated values (CSV), or the like, the document structure is not specified by tags or the like, and machine readability is low. In the present embodiment, such text data corresponds to the document data 2 intended to be converted. Note that the document data after conversion can be any data as long as the document structure can be specified by tagging or the like. In the present embodiment, as an example, it is assumed that the document structure is converted into text data expressed using a markdown notation.

In addition, the document data 2 intended to be converted is assumed not to satisfy the token length constraint of the large language model M1 as it is and to be long with a large number of pages or the like.

Accordingly, the information processing device 1 divides the document data 2 into a plurality of document fragments such that the token length constraint of the large language model M1 is satisfied, then requests the large language model M1 to convert each document fragment, and outputs a context-considered fragment group 3 that includes a plurality of structured document fragments.

Note that the context-considered fragment group 3 includes a plurality of document fragments (context-considered fragments) obtained by combining a plurality of structuring results 27 acquired by the large language model M1 converting each document fragment and then dividing again the combined structuring results 27 at positions on the document structure specified by tagging or the like, such as a chapter and a section.

Each of the document fragments before conversion is obtained by dividing the document data 2 according to the token length constraint of the large language model M1 and is not obtained by dividing the document data 2 according to positions on the document structure. Therefore, the plurality of structuring results 27 obtained from each document fragment is divided in the middle of the document structure such as a chapter or a section, and thus, the information processing device 1 obtains structured document data by combining the plurality of structuring results 27.

In addition, the document data obtained by combining (document data after structuring) is long with a large number of pages or the like, similarly to the document data 2 before conversion, and is difficult to handle as it is. Therefore, the information processing device 1 divides the document data after structuring again at positions on the document structure specified by tagging or the like, such as a chapter and a section, and outputs the context-considered fragment group 3. Note that, in the present embodiment, a configuration for outputting the context-considered fragment group 3 is exemplified, but it is needless to say that a configuration for outputting document data obtained by combining (document data after structuring) may be employed.

The information processing device 1 includes a preprocessing unit 10, a pre-division unit 11, a local context information extraction unit 12, a global context information extraction unit 13, a post-structuring fragment database (DB) 14, a document structuring request composing unit 15, a large language model execution unit 16, and a post-division unit 17.

The preprocessing unit 10 is a processing unit that performs a preprocess (S1) on the input document data 2, such as text extraction. By this preprocess, the information processing device 1 obtains a text document 20 from the document data 2.

The pre-division unit 11 is a processing unit that pre-divides (S2) the text document 20 for each predetermined number of characters, for example, in accordance with the token length constraint or the like of the large language model M1. In the present embodiment, since a conversion request is made to the large language model M1 by merging two document fragments, division is done such that a result of merging two document fragments satisfies the token length constraint in the pre-division (S2).

Through this pre-division, the pre-division unit 11 obtains a pre-divided fragment group 21 including, for example, 1 to N document fragments. Note that the pre-division unit 11 is assumed to give numbers (1 to N) corresponding to the order to the respective document fragments at the time of pre-division (S2).

The information processing device 1 reads each of the document fragments included in the pre-divided fragment group 21 in numerical order and requests the large language model M1 to structure the read document fragments. Here, the document fragment requested to be structured among the document fragments included in the pre-divided fragment group 21 will be referred to as a focused fragment 22, and its number will be denoted as i. The document fragment immediately preceding this focused fragment 22 will be referred to as an immediately preceding fragment 23, and its number will be denoted as i-1. Note that the immediately preceding fragment 23 is not limited to one document fragment immediately preceding the focused fragment 22 and may be a collection of a plurality of document fragments (i-1, i-2, ..., i-M) preceding the focused fragment 22.

At the time of the structuring request for the focused fragment 22 with number i, the structuring result 27 for the immediately preceding fragment 23 with number i-1 has already been obtained by the large language model M1 and is stored in the post-structuring fragment DB 14. This structuring result 27 for the immediately preceding fragment 23 will be denoted as an immediately preceding fragment conversion result 24.

The local context information extraction unit 12 is a processing unit that extracts local context information indicating a local document structure and context closest to the focused fragment 22 in the document data 2. Specifically, the local context information extraction unit 12 extracts, as the local context information, the immediately preceding fragment 23 included in the pre-divided fragment group 21 and the immediately preceding fragment conversion result 24 stored in the post-structuring fragment DB 14.

The global context information extraction unit 13 is a processing unit that extracts global context information 25 indicating a global document structure and context such as a chapter-section structure and a table header of the document data 2. Specifically, the global context information extraction unit 13 extracts, as the global context information 25, a chapter-section structure extracted based on rules, a document structure such as a table header, or a document summary extracted by a known document summarization technique, based on the converted document fragments (the structuring results 27) stored in the post-structuring fragment DB 14 (S4).

The post-structuring fragment DB 14 is a database that stores the structuring results 27 obtained by the large language model execution unit 16 causing the large language model M1 to execute conversion, for each of the document fragments included in the pre-divided fragment group 21.

The document structuring request composing unit 15 is a processing unit that creates a request sentence 26 for requesting the large language model M1 to convert each of the document fragments included in the pre-divided fragment group 21 into a document whose document structure is specified.

Specifically, the document structuring request composing unit 15 creates, as the request sentence 26, a request sentence including the focused fragment 22, as well as the local context information (the immediately preceding fragment 23 and the immediately preceding fragment conversion result 24) extracted by the local context information extraction unit 12, and the global context information 25 extracted by the global context information extraction unit 13 (S3).

As an example, the document structuring request composing unit 15 assigns, as headers of the request sentence 26, a long document structuring system prompt 26a, a long design document structuring instruction 26b, and a document structure hint 26c related to structuring of a long document such as the document data 2. For these long document structuring system prompt 26a, long design document structuring instruction 26b, and document structure hint 26c, fixed phrases preset by a user or the like are used. Next, the document structuring request composing unit 15 creates the request sentence 26 in which the global context information 25, the focused fragment 22, the immediately preceding fragment 23, and the immediately preceding fragment conversion result 24 is included in the body.

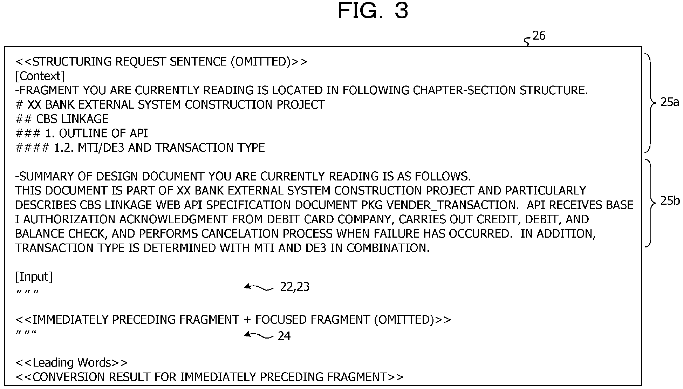

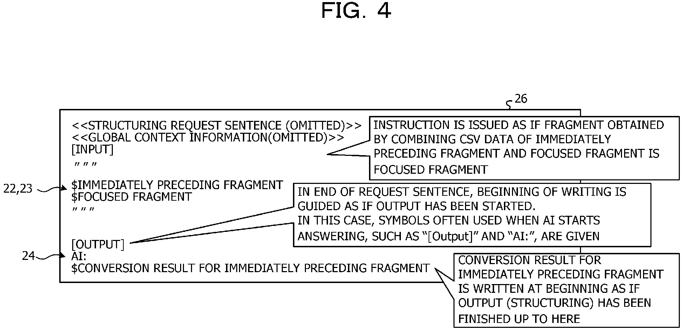

FIGs. 3 and 4 are explanatory diagrams explaining an example of the request sentence. As illustrated in FIG. 3, the document structuring request composing unit 15 includes global context information (structure) 25a and global context information (summary) 25b in a [Context] portion or the like in the body of the request sentence 26. In addition, the document structuring request composing unit 15 adds the focused fragment 22 to the immediately preceding fragment 23 to include the added focused fragment 22 and immediately preceding fragment 23 in an [Input] portion or the like in the body of the request sentence 26. Furthermore, the document structuring request composing unit 15 includes the immediately preceding fragment conversion result 24 in <<Leading Words> > or the like in the body of the request sentence 26.

Here, <<Leading Words>> is information for guiding the output from the large language model M1 to a particular pattern. By including the immediately preceding fragment conversion result 24 as <<Leading Words>> of the request sentence 26, an output (the structuring result 27 for the focused fragment 22) that has taken over the contents of the immediately preceding fragment conversion result 24 can be obtained.

In addition, as illustrated in FIG. 4, the document structuring request composing unit 15 may create the request sentence 26 that specifies [Output] representing that the output up to the immediately preceding fragment 23 has already been finished with respect to [Input] representing that the focused fragment 22 combined with the immediately preceding fragment 23 is treated as the immediately preceding fragment 23 intended to be converted.

Specifically, the document structuring request composing unit 15 describes the focused fragment 22 subsequent to the immediately preceding fragment 23 in [Input]. In addition, the document structuring request composing unit 15 describes the immediately preceding fragment conversion result 24 subsequent to a symbol indicating the output from the large language model M1 in [Output]. The symbol indicating the output from the large language model M1 is a symbol or the like used when an artificial intelligence (AI) (large language model M1) answers, such as "AI:", for example. This may allow the information processing device 1 to guide the large language model M1 such that the immediately preceding fragment 23 has already been converted in the conversion request in which the immediately preceding fragment 23 and the focused fragment 22 are merged.

The large language model execution unit 16 is a processing unit that inputs the request sentence 26 created by the document structuring request composing unit 15 to the large language model M1 and executes conversion into a document fragment whose document structure is specified. The large language model execution unit 16 gives the numbers (1 to N) to the structuring results 27 obtained by the large language model M1 executing conversion for the document fragments (1 to N) included in the pre-divided fragment group 21 and then stores the structuring results 27 in the post-structuring fragment DB 14.

Here, the document structuring request composing unit 15 may include an instruction in the request sentence 26 so as to specify the levels of structuring of titles and list elements not only by tagging but also by names or the like. The large language model execution unit 16 may correct the levels specified by names or the like with a level correction process utilizing character string replacement such as a regular expression, for the structuring results 27 obtained by the large language model M1 executing conversion.

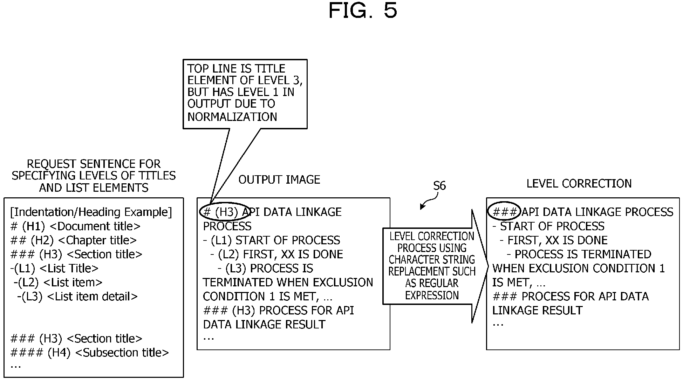

FIG. 5 is an explanatory diagram explaining an example of the level correction process. As illustrated in FIG. 5, the request sentence 26 includes instructions to specify the levels of the titles, such as H1, H2, and H3, and specify the levels of the list elements, such as L1, L2, and L3, together with the tagging of the titles and list elements.

In an example of an output image from the large language model M1 according to such a request sentence 26, the top line that is a title of level 3 (H3) is given the name indicating H3, but may be sometimes given a tag of level 1.

On the other hand, the large language model execution unit 16 can perform exact tagging by performing the level correction process (S6) using a regular expression or the like so as to replace the tag with the exact tag by referring to the name or the like.

Returning to FIGs. 1 and 2, the post-division unit 17 is a processing unit that combines the structuring results 27 included in the post-structuring fragment DB 14 sequentially in order and then divides the combined structuring results 27 again (S5) at positions on the document structure specified by tagging or the like, such as a chapter or a section. The information processing device 1 outputs the context-considered fragment group 3 obtained by this division by the post-division unit 17.

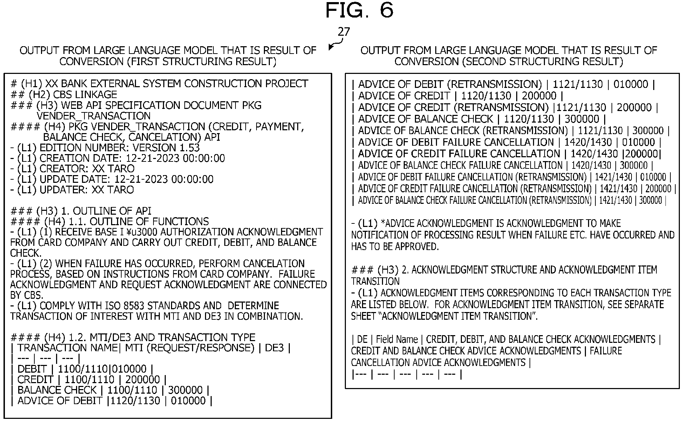

FIG. 6 is an explanatory diagram explaining an example of the structuring results 27. As illustrated in FIG. 6, regarding the input document data 2, the information processing device 1 successively obtains the structuring results 27 in the order of a first structuring result relating to the first document fragment, a second structuring result relating to the second document fragment, and so forth. Regarding these structuring results 27, for example, in the second structuring result, there is no unwanted output at the beginning part and the end part, and consistent structuring directly joined with the first structuring result can be achieved.

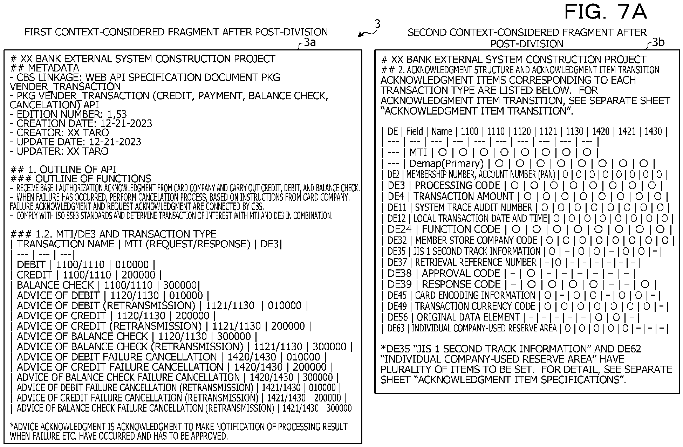

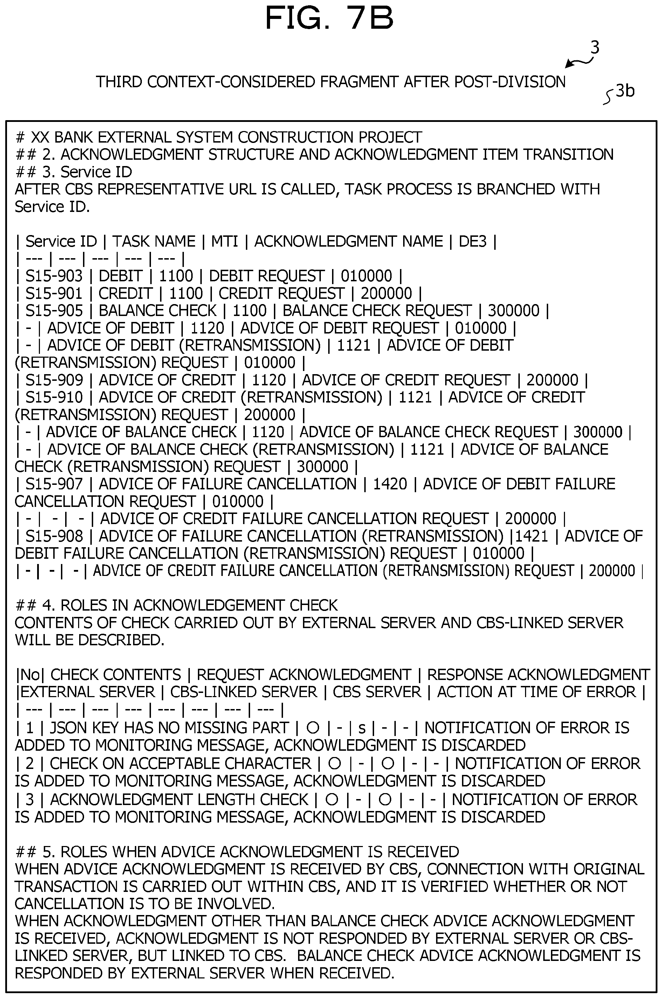

FIGs. 7A and 7B are explanatory diagrams explaining an example of output results. As illustrated in FIGs. 7A and 7B, context-considered fragments 3a, 3b, 3c, ... included in the context-considered fragment group 3 have been formed as document fragments such that chapters, sections, tables, and the like are not interrupted.

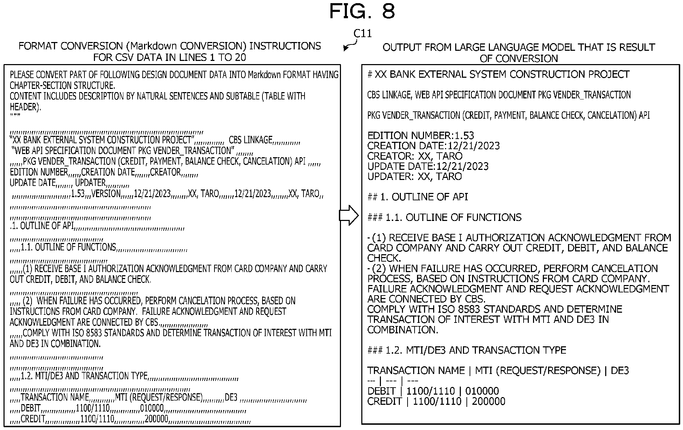

FIGs. 8 to 11 are explanatory diagrams explaining comparative examples. As illustrated in FIG. 8, in the case C11, CSV data in the beginning (lines 1 to 20) is assigned as the focused fragment 22, and structuring (markdown conversion) is requested to the large language model M1 with a request sentence describing only this focused fragment 22. The conversion (output) has been performed for this beginning portion without any problem.

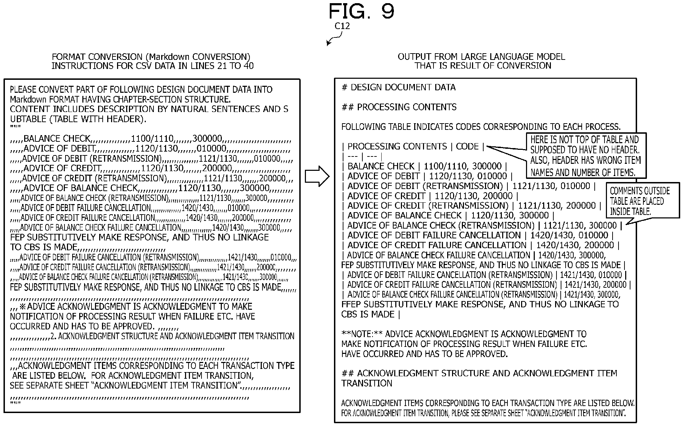

As illustrated in FIG. 9, in the case C12, CSV data in lines 21 to 40 is assigned as the focused fragment 22 subsequent to the case C11, and structuring is requested to the large language model M1 with a request sentence describing only this focused fragment 22. In this case C12, since the local context information, the global context information 25, and the like are not included in the request sentence, the output contains errors in the item names and the number of items in the header of the table. In addition, in the case C12, an error of placing the comments outside the table in the table has also occurred.

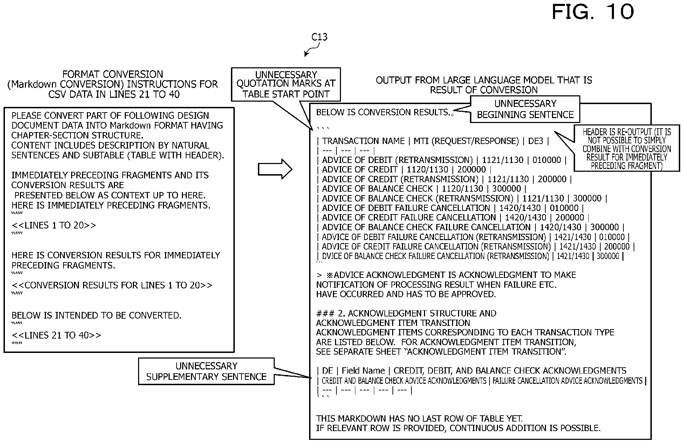

As illustrated in FIG. 10, in the case C13, CSV data in lines 21 to 40 is assigned as the focused fragment 22 subsequent to the case C11, and structuring is requested to the large language model M1 with a request sentence describing this focused fragment 22 as well as the immediately preceding fragment 23 and the immediately preceding fragment conversion result 24. In this case C13, since the global context information 25 and the like are not included in the request sentence, the output includes an unnecessary beginning sentence and quotation marks. In addition, the output is inconsistent, such as re-outputting the header and including an unnecessary supplementary sentence.

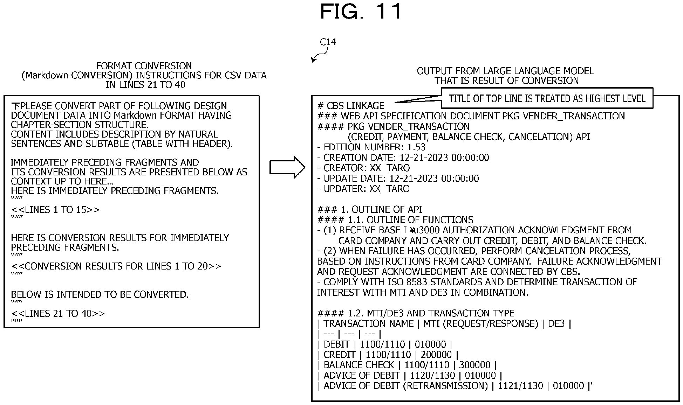

As illustrated in FIG. 11, in the case C14, CSV data in lines 21 to 40 is assigned as the focused fragment 22 subsequent to the case C11, and structuring is performed with a request sentence similar to the case C13. An exemplary output of this case C14 includes an error representing that the title at the top line cut by fragmentation is treated as the highest level.

As described above, the information processing device 1 divides the document data 2 intended to be converted into a plurality of document fragments. When requesting the large language model M1 to convert each of the divided document fragments into a document whose document structure is specified, the information processing device 1 creates the request sentence 26 including the immediately preceding fragment 23 immediately preceding the focused fragment 22 requested to be converted, the focused fragment 22 requested to be converted, and the immediately preceding fragment conversion result 24 after conversion obtained by the large language model M1 converting the immediately preceding fragment 23. The information processing device 1 inputs the created request sentence 26 to the large language model M1 and executes conversion into a document fragment whose document structure is specified.

This allows the information processing device 1 to, regarding structuring of the immediately preceding fragment 23 and the focused fragment 22, make a request guided such that structuring up to the immediately preceding fragment 23 has been completed, to the large language model M1. In the large language model M1 that has accepted such a request, the beginning part of the output after conversion is affected by the conversion results up to the immediately preceding fragment 23, that is, the context or the like of the immediately preceding fragment 23 included in the structuring result 27 (the degree of freedom in the beginning part is reduced). Therefore, the large language model M1 will output a consistent structuring result affected by the conversion results up to the immediately preceding fragment 23. In this manner, the information processing device 1 may suppress structuring by the large language model M1 becoming unstable and may support appropriate conversion into structured document data.

In addition, the information processing device 1 creates the request sentence 26 including the immediately preceding fragment conversion result 24 subsequent to a symbol indicating the output after conversion of the large language model M1. This may allow the information processing device 1 to obtain, regarding structuring of the immediately preceding fragment 23 and the focused fragment 22, the request sentence 26 that reproduces a situation where the large language model M1 has partially output the conversion result. That is, the information processing device 1 may appropriately guide the output of the large language model M1, as an application of the leading word prompt pattern.

In addition, the information processing device 1 extracts the global context information 25 indicating a sentence structure according to the document data 2, based on a plurality of the immediately preceding fragment conversion results 24 after conversion, and creates the request sentence 26 including the extracted global context information 25. This may allow the information processing device 1 to make a conversion request to the large language model M1 so as to output a consistent sentence structure based on the plurality of the immediately preceding fragment conversion results 24 after conversion.

Furthermore, the information processing device 1 combines the document fragments (structuring results 27) after conversion and divides the combined document at positions corresponding to the breaks in the document structure. This may allow the information processing device 1 to obtain the context-considered fragment group 3 corresponding to the document structure such as a chapter and a section. By obtaining such a context-considered fragment group 3, the information processing device 1 may easily present a document fragment corresponding to the document structure such as a chapter or a section in a later task (for example, document search).

In addition, the information processing device 1 extracts first context information (global context information 25) indicating the sentence structure according to the document data 2 and second context information indicating the document structure according to the immediately preceding fragment 23. When requesting the large language model M1 to convert each of the divided document fragments into a document whose document structure is specified, the information processing device 1 creates the request sentence 26 including the focused fragment 22 requested to be converted, as well as the first context information and the second context information. The information processing device 1 inputs the created request sentence 26 to the large language model M1 and executes conversion into a document fragment whose document structure is specified.

In this manner, by making a conversion request including the first context information and the second context information to the large language model M1 for each of the divided document fragments, the information processing device 1 may obtain a consistent structuring result in line with the context information, from the large language model M1. Therefore, the information processing device 1 may suppress structuring by the large language model M1 becoming unstable and may support appropriate conversion into structured document data.

Note that each of the illustrated constituent elements of each device does not have to be necessarily physically configured as illustrated in the drawings. That is, specific modes of distribution and integration of each device are not limited to those illustrated, and the whole or a part of the device can be configured by being functionally or physically distributed or integrated in any unit according to various loads, use situations, and the like.

In addition, all or any part of various processing functions of the preprocessing unit 10, the local context information extraction unit 12, the global context information extraction unit 13, the post-structuring fragment DB 14, the document structuring request composing unit 15, the large language model execution unit 16, and the post-division unit 17 of the information processing device 1 may be executed on a central processing unit (CPU) (or microcomputer such as a micro processing unit (MPU) or micro controller unit (MCU)). Furthermore, it is needless to say that all or any part of various processing functions may be executed on a program analyzed and executed by a CPU (or microcomputer such as an MPU or MCU) or on hardware by wired logic. In addition, various processing functions performed by the information processing device 1 may be executed by a plurality of computers in cooperation through cloud computing.

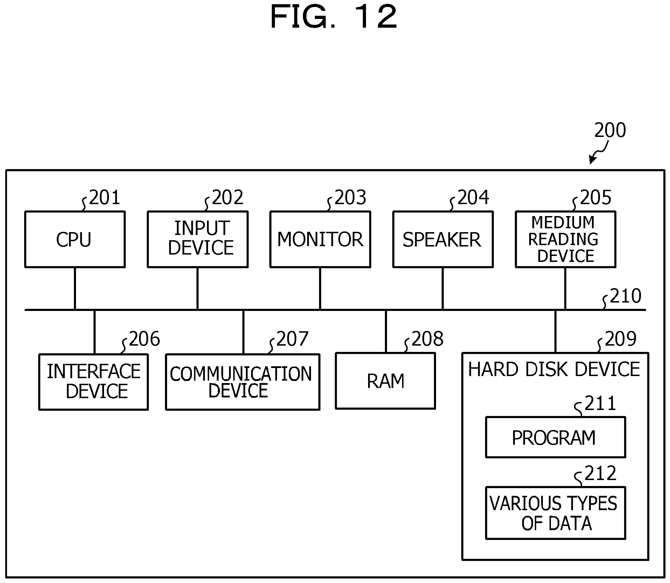

Meanwhile, various processes described in the above embodiments can be implemented by execution of a program prepared in advance, on a computer. Thus, hereinafter, an example of a computer configuration (hardware) that executes a program having functions similar to the functions of the above embodiments will be described. FIG. 12 is an explanatory diagram explaining an example of a computer configuration.

As illustrated in FIG. 12, a computer 200 includes a CPU 201 that executes various type of arithmetic processing, an input device 202 that receives a data input, a monitor 203, and a speaker 204. In addition, the computer 200 includes a medium reading device 205 that reads a program or the like from a storage medium, an interface device 206 for coupling to various devices, and a communication device 207 for coupling to and communicating with an external device in a wired or wireless manner. Furthermore, the computer 200 includes a random access memory (RAM) 208 that temporarily stores various types of information, and a hard disk device 209. In addition, each of the units (201 to 209) in the computer 200 is coupled to a bus 210.

The hard disk device 209 stores a program 211 for executing various processes in the functional components (such as the preprocessing unit 10, the local context information extraction unit 12, the global context information extraction unit 13, the post-structuring fragment DB 14, the document structuring request composing unit 15, the large language model execution unit 16, and the post-division unit 17) described in the above embodiments. In addition, the hard disk device 209 stores various types of data 212 referred to by the program 211. The input device 202 receives, for example, an input of operation information from an operator. The monitor 203 displays, for example, various screens operated by the operator. For example, a printing device and the like are coupled to the interface device 206. The communication device 207 is coupled to a communication network such as a local area network (LAN) and exchanges various types of information with an external device via the communication network.

The CPU 201 reads the program 211 stored in the hard disk device 209 and loads the read program 211 into the RAM 208 to execute the loaded program 211, thereby performing various processes relating to the above functional components (such as the preprocessing unit 10, the local context information extraction unit 12, the global context information extraction unit 13, the post-structuring fragment DB 14, the document structuring request composing unit 15, the large language model execution unit 16, and the post-division unit 17). That is, the CPU 201 is an example of a control unit. Note that the program 211 does not have to be stored in the hard disk device 209. For example, the program 211 stored in a storage medium readable by the computer 200 may be read and executed. The storage medium readable by the computer 200 corresponds to a portable recording medium such as a compact disc read-only memory (CD-ROM), a digital versatile disc (DVD) disk, or a universal serial bus (USB) memory, a semiconductor memory such as a flash memory, a hard disk drive, or the like, for example. In addition, this program 211 may be prestored in a device coupled to a public line, the Internet, a LAN, or the like, and the computer 200 may read the program 211 from such a device to execute the read program 211.

## Claims

1. An information processing program for causing a computer to execute a process comprising:
dividing document data intended to be converted, into a plurality of document fragments;
when requesting a large language model to convert each of the divided document fragments into a document of which a document structure is specified, creating a conversion request sentence that includes the document fragments immediately preceding the document fragments requested to be converted, the document fragments requested to be converted, and the document fragments after conversion obtained by the large language model by converting the document fragments immediately preceding the document fragments requested to be converted; and
inputting the created conversion request sentence to the large language model to execute the conversion into the document fragments of which the document structure is specified.

2. The information processing program according to claim 1, wherein the creating includes creating the conversion request sentence that includes the document fragments after the conversion subsequent to symbols that indicate outputs after the conversion by the large language model.

3. The information processing program according to claim 1, for further causing the computer to execute the process comprising
extracting a sentence structure according to the document data, based on a plurality of the document fragments after conversion, wherein
the creating includes creating the conversion request sentence that includes the extracted sentence structure.

4. The information processing program according to claim 1, for further causing the computer to execute the process comprising
combining the document fragments after the conversion, and dividing a combined document at positions that correspond to breaks in the document structure.

5. An information processing program for causing a computer to execute a process comprising:
dividing document data intended to be converted, into a plurality of document fragments;
extracting first context information that indicates a sentence structure according to the document data, and second context information that indicates a document structure according to the document fragments immediately preceding the document fragments requested to be converted;
when requesting a large language model to convert each of the divided document fragments into a document of which a document structure is specified, creating a conversion request sentence that includes the document fragments requested to be converted, as well as the first context information and the second context information; and
inputting the created conversion request sentence to the large language model to execute conversion into the document fragments of which the document structure is specified.

6. The information processing program according to claim 5, wherein the extracting includes assigning the document structure extracted based on a plurality of the document fragments after the conversion, as the first context information.

7. The information processing program according to claim 5, wherein
the extracting includes assigning the document fragments immediately preceding the document fragments requested to be converted, and the document fragments after the conversion obtained by the large language model by converting the document fragments immediately preceding the document fragments requested to be converted, as the second context information.

8. An information processing method for causing a computer to execute a process comprising:
dividing document data intended to be converted, into a plurality of document fragments;
when requesting a large language model to convert each of the divided document fragments into a document of which a document structure is specified, creating a conversion request sentence that includes the document fragments immediately preceding the document fragments requested to be converted, the document fragments requested to be converted, and the document fragments after conversion obtained by the large language model by converting the document fragments immediately preceding the document fragments requested to be converted; and
inputting the created conversion request sentence to the large language model to execute the conversion into the document fragments of which the document structure is specified.

9. The information processing method according to claim 8, wherein
the creating includes creating the conversion request sentence that includes the document fragments after the conversion subsequent to symbols that indicate outputs after the conversion by the large language model.

10. The information processing method according to claim 8, for further causing the computer to execute the process comprising
extracting a sentence structure according to the document data, based on a plurality of the document fragments after conversion, wherein
the creating includes creating the conversion request sentence that includes the extracted sentence structure.

11. The information processing method according to claim 8, for further causing the computer to execute the process comprising
combining the document fragments after the conversion, and dividing a combined document at positions that correspond to breaks in the document structure.

12. An information processing method for causing a computer to execute a process comprising:
dividing document data intended to be converted, into a plurality of document fragments;
extracting first context information that indicates a sentence structure according to the document data, and second context information that indicates a document structure according to the document fragments immediately preceding the document fragments requested to be converted;
when requesting a large language model to convert each of the divided document fragments into a document of which a document structure is specified, creating a conversion request sentence that includes the document fragments requested to be converted, as well as the first context information and the second context information; and
inputting the created conversion request sentence to the large language model to execute conversion into the document fragments of which the document structure is specified.

13. The information processing method according to claim 12, wherein
the extracting includes assigning the document structure extracted based on a plurality of the document fragments after the conversion, as the first context information.

14. The information processing method according to claim 12, wherein
the extracting includes assigning the document fragments immediately preceding the document fragments requested to be converted, and the document fragments after the conversion obtained by the large language model by converting the document fragments immediately preceding the document fragments requested to be converted, as the second context information.

15. An information processing device comprising:
a control unit configured to:
divide document data intended to be converted, into a plurality of document fragments;
when requesting a large language model to convert each of the divided document fragments into a document of which a document structure is specified, create a conversion request sentence that includes the document fragments immediately preceding the document fragments requested to be converted, the document fragments requested to be converted, and the document fragments after conversion obtained by the large language model by converting the document fragments immediately preceding the document fragments requested to be converted; and
input the created conversion request sentence to the large language model to execute the conversion into the document fragments of which the document structure is specified.
